# EUROPEAN PATENT APPLICATION

(11) **EP 1 095 728 A2**
(43) Date of publication of application: **02.05.2001**
(21) Application number: 00123162.0
(22) Date of filing: 25.10.2000
(51) Int. Cl.: B23P 9/00, B24B 39/02, F16C 33/64, B21H 1/12

(54) **Method of finishing the land of the outer ring of a bearing and a bearing**

(30) Priority: 27.10.1999 JP 30516699
(71) Applicant: MINEBEA CO., LTD., Kitasaku-gun, Nagano-ken (JP)
(72) Inventor: Obara, Rikura, c/o Minebea Co., Ltd. Karuizawa, Kitasaku-gun, Nagano-ken (JP)
(74) Representative: Heusler, Wolfgang, Dipl.-Ing.

(57) **Abstract**

A land (6) formed on the inner peripheral surface of the outer ring (5) of a bearing (1) is pressed under predetermined pressure against the outer peripheral surface (11b) of a rotating finishing roller (11). Burrs (C) and/or fine foreign materials (D) formed on the land (6) are unremovably embedded in the land (6) by pressing projections (6b) formed on the land (6). When a relative movement between the outer ring (5) and the land (6) is performed, the land (6) is more smoothened and the burrs (C) and/or the fine foreign materials (D) are fully and further unremovably embedded in the land (6). When a spiral groove (18) is formed on the outer peripheral surface (11b) of the finishing roller (11), the amount of the burrs (C') and/or fine foreign materials (D') embedded in the land (6) is reduced.

## Description

The present invention relates to a method of finishing the land of the outer ring of a bearing and a bearing including an outer ring having a land finished by this finishing method.

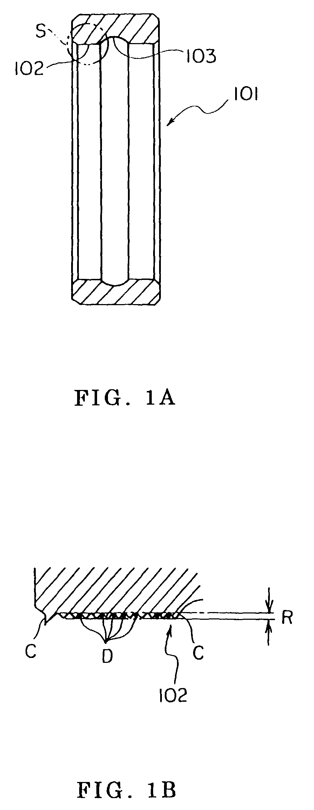

As shown in Fig. 1A, a ball bearing is provided with an outer ring 101 having an inner peripheral surface defining a cylindrical land 102. In the middle portion of the land 102 is formed an annular race groove 103 which is super-finished to receive balls. The other portions of the land 102 than the race groove 103 are machined by turning or grinding operation because the other portions of the land 102 are not in contact with any elements or components of the bearing and thus are unnecessary to be machined precisely.

Therefore, as shown in Fig. 1B, which is an enlarged cross-sectional view of the encircled portion S as illustrated in Fig. 1A, the land 102 has such a large surface roughness R as 1.6 µm Ra to 3.2 µm Ra (Ra being a roughness average). Further, burrs C are inevitably produced on the rough land 102 by turning or grinding operation. In addition, fine foreign materials D such as small chips produced by turning operation, small ground particles formed from the land 102 by grinding operation and/or grinding particles separated from a grinding wheel during grinding operation, and/or fine dust are attached to the rough land 102. In many cases, such burrs C and/or foreign materials D are hardly removed from the land 102 even by cleaning. Thus, the ball bearing must be assembled and used in a state in which the burrs C and the foreign materials D remain attached to the land 102 as shown in Fig. 1B.

However, during the assembly and operation of a ball bearing, some burrs and/or some foreign materials D would happen to be separated from the land 102 and enter the race groove 103 of the outer ring 101 and/or the race groove of the inner ring of the ball bearing, whereby the balls received in the race groove would be damaged. When this happened, not only the life of the ball bearing would be extremely shortened but also irregular rotation, vibration and/or seizure would occur on the ball bearing. As a result, the ball bearing would not function as a precision element. Further, the ball bearing would not operate well and replacement thereof would be required.

Such disadvantages must be absolutely avoided especially when the bearing is used in a device requiring an extremely high rotational accuracy such as a spindle motor and a pivot bearing for an actuator block for a rotary memory medium.

It is an object of the present invention to provide a method of finishing a land on the outer ring of a ball bearing, wherein burrs and/or fine foreign materials such as fine chip and/or fine grinding and/or ground particles produced on the lands of the outer ring during turning or grinding operation and/or fine dust attached to the land, which burrs and/or foreign materials could not be removed even by cleaning, are unremovably embedded in the land.

Another object of the present invention is to provide a method of finishing a land on the outer ring of a ball bearing smoothly although burrs and/or fine foreign materials exist on or in the land.

A further object of the present invention is to provide a ball bearing having a land finished smoothly according to the method of the present invention.

In order to achieve the object of the present invention, a method of finishing a land on the outer ring of a bearing includes the steps of:
rotating a cylindrical finishing roller together with the outer ring wherein the finishing roller has hardness higher than that of the outer ring and an outer peripheral surface;
pressing the outer peripheral surface of the finishing roller against a cylindrical rough land formed on the outer ring; and
pressing fine projections formed on the rough land by the outer peripheral surface of the finishing roller so as to embed burrs and/or fine foreign materials attached to the rough land in the land unremovably.

The pressure applied to the land by the finishing roller is in a range of elastic deformation of the outer ring.

A relative movement between the outer ring and the finishing roller along the finishing roller further ensures embedding of burrs and/or fine foreign materials in the land.

Further, by forming a spiral groove on the outer peripheral surface of the finishing roller, the spiral groove catches burrs and/or foreign materials which are not embedded in the land and carries them out of the land as the finishing roller is moved axially.

The bearing can be a ball bearing.

In every case, the land is finished very smoothly, for example, to a super-finished state or to an approximately super-finished state.

A bearing according to the present invention comprises an outer ring having a land formed by the method as mentioned above.
Fig. 1A is a longitudinal cross-sectional view of the outer ring of a conventional ball bearing;
Fig. 1B is an enlarged cross-sectional view of the encircled portion S of the land of the outer ring in Fig. 1A;
Fig. 2 is a longitudinal cross-sectional view of an embodiment of a ball bearing having an outer ring whose land is being finished according to the method of the present invention;
Fig. 3 is a front view showing a method of finishing the land of the ball bearing of Fig. 2; and
Fig. 4 is a cross-sectional view taken along line A-A of Fig. 3.

The present invention will be described in detail by way of preferred embodiments with reference to the accompanying drawings.

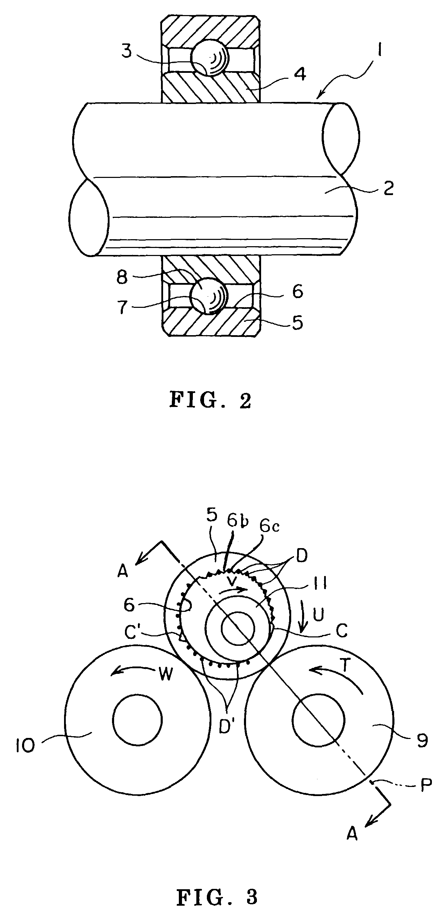

As shown in Fig. 2, a ball bearing 1 includes a shaft 2 and an annular inner ring 4 coaxially surrounding the shaft 2, fixed thereto and having an outer peripheral surface formed with an annular race surface 3. An annular outer ring 5 coaxially surrounds the inner ring 4. The inner surface of the outer ring 5 forms a cylindrical land 6 separated from the outer peripheral surface of the inner ring 4 at a predetermined distance.

A race surface 7 in a shape of an annular groove is formed in that middle portion of the land 6 which is disposed opposed to the race surface 3 of the inner ring 4. A plurality of balls 8 are arranged between the race surface 3 of the inner ring 4 and the race surface 7 of the outer ring 5 so as to be rotatable circumferentially.

As described in the prior art, the race surface 7 of the outer ring 5 is ground in a super-finished manner or in an approximately super-finished manner whereas the land 6 is in a turned or ground state before the race surface 7 is finished. Thus, the surface roughness of the land 6 except for the race surface 7 is the same as that of the land of the outer ring of the conventional bearing. Further, burrs C and/or fine foreign materials D (that is, fine chips, fine grinding and/or ground particles and/or fine dust) remain attached to the land 6 even after cleaning. The land 6 has quite a lot of small projections 6b and depressions 6c, as will be described later.

As shown in Fig. 3, a driving roller 9 and a guiding roller 10 are rotatably arranged and extend horizontally and parallel with each other. That outer ring 5 of the ball bearing 1 whose land 6 is machined by turning or grinding operation is placed on the outer peripheral surfaces of both rollers 9 and 10. A cylindrical finishing roller 11 is horizontally passed through the bore 6a defined by the land 6 of the outer ring 5 in a state parallel with both rollers 9 and 10.

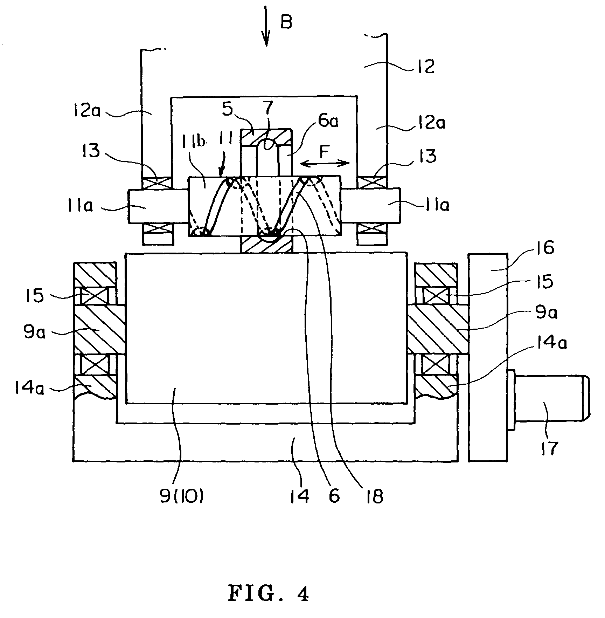

As shown in Fig. 4, shaft portions 11a on both ends of the finishing roller 11 are rotatably supported through bearing 13 by arms 12a extending downward from both ends of a pressing device (a press) 12, respectively. As shown in Fig. 4, the pressing device 12 is provided so that the central axis of the finishing roller 11 is moved in a plane P substantially including the axes of the outer ring 5 and the driving roller 9 so as to approach and be separated from the central axis of the driving roller 9. Although not shown in the figures, the outer ring 5 can be pressed against the finishing roller 11 and separated therefrom.

The driving roller 9 is rotatably supported at the shaft portion 9a of its both ends through bearings 15 by supporting arms 14a extending upward from both ends of a support member 14. One of the shaft portions 9a (the right shaft portion 9a in Fig. 4) of the driving roller 9 is connected to an electric motor 17 through a speed reduction gearbox 16. The guiding roller 10 is supported in the same manner as the driving roller 9, except for the speed reduction gearbox 16 and the electric motor 17.

The pressing device 12 is moved downward towards the driving roller 9 in the vertical direction B as shown in Fig. 4 and allows the outer peripheral surface 11b of the finishing roller 11 to press the land 6 of the outer ring 5 under a predetermined pressure as shown in Figs. 3 and 4, whereby the outer peripheral surface of the outer ring 5 is pressed against the outer peripheral surface of the driving roller 9. As the electric motor 17 rotates, the driving roller 9 is also rotated, for example, in the counterclockwise direction T as shown in Fig. 3 through the speed reduction gear box 16 and the right shaft portion 9a of the driving motor 9. Due to the counterclockwise rotation of the driving roller 9, the outer ring 5 is rotated in the clockwise direction U and the finishing roller 11 having the outer peripheral surface 11b pressing the land 6 is also rotated in the clockwise direction V. Likewise, the guiding roller 10 with its outer peripheral surface pressed against the outer peripheral surface of the outer ring 5 is rotated in the counterclockwise direction W.

As the outer ring 5 and the finishing roller 11 are rotated, the finishing roller 11 presses, at its outer peripheral surface 11b, the fine projections 6b (extremely largely shown at the right side of the plane P in Fig. 3) which have been formed on the rough land 6 of the outer ring 5 so that the burrs C produced on the rough land 6 and/or the fine foreign materials D attached to the small depressions 6c (also extremely largely shown at the right side of the plane P in Fig. 3) in the land 6 are unremovably embedded in the land 6, as shown by C' and D' at the left side of the plane P in Fig. 3. In this process, the land 6 in which the burrs C' and/or the fine foreign materials D' are embedded is smoothened very much, for example, to a super-finished state or to an approximately super-finished state by the finishing roller 11.

In this way, the outer ring 5 with the land 6 can be assembled into a bearing in spite of existence of the burrs C' and/or foreign materials D' in the land 6 of the outer ring 5. During the operation of the machine or equipment, into which the outer rings have been assembled, the burrs C' and/or foreign materials D' will not be separated from the lands 6 of the outer rings 5 of the bearing 1 assembled in such machines, machine components, equipment or equipment components, and thus the burrs C' and/or fine materials D' will not enter the space between the race surface 3 of the inner ring 4 of the ball bearing 1 and the race surface 7 of the outer ring 5 of the bearing 1 (Fig. 2), and/or they will not be attached to the race surface 3 of the inner ring 4 of the ball bearing 1 and the race surface 7 of the outer ring 5 of the bearing 1 (Figs. 2 and 4). Thus, trouble could be prevented which the burrs C' and/or fine foreign materials D' would cause on the machines, machine components, equipment or equipment components into which the ball bearings 1 manufactured by pressing the burrs and/or foreign materials in the land 6 are assembled. Here, the machines or equipment includes automobiles, machine tools, office machines (such as printing machines, copying machines and personal computers) and particularly hard disc driving devices.

Alternatively, the finishing roller 11 can be rotated around its own axis and moved in either one of its axial directions together with the pressing device 12. Due to this axial movement, the outer peripheral surface 11b of the finishing roller 11 further pushes the burrs C and/or fine foreign materials D so as to further embed them in the land 6, as shown by C' and/or D'. Thus, they are more firmly prevented from being separated from the land 6.

Further, when the finishing roller 11 is provided with a spiral groove 18 in its outer peripheral surface 11b as shown in Fig. 4 and then rotated and moved in either direction of the arrow F, that is, in one of its axial directions, burrs C and/or fine foreign materials D on the land 6, found in the area of the spiral groove 18 are removed by the spiral groove 18 and held or caught therein.

As the finishing roller 11 moves continuously in the direction F, the burrs C and/or foreign materials D caught in the spiral groove 18 are taken out of the range of the land 6. The other portions of the burrs C and/or fine foreign materials D which are not in the range of the spiral groove 18 are embedded as C' and/or D' in the land 6 by the outer peripheral surface 11b of the finishing roller 11. The amount of the burrs C' and/or fine foreign materials D' which are embedded in the land 6 is reduced by the amount of the burrs and/or fine foreign materials which are removed by the spiral groove 18, thereby further ensuring the prevention of removal of the burrs and/or foreign materials existing in the land 6.

In any cases, although the burrs C' and/or fine foreign materials D' are embedded in the land 6, the surface roughness of the land 6 is made so small that the land 6 is super-finished or approximately super-finished. Thus, fine dust is not easily attached to the land 6. Even if fine dust were laid on the land 6, it could easily and immediately be removed therefrom.

The embodiments of the present invention have been described by using ball bearings as an example. However, the present invention can be applied to methods of finishing the lands of any bearings manufactured by the methods according to the present invention, as long as the bearings have cylindrical lands on their outer rings. For instance, this invention can be applied to roller bearings and the manufacture of the same. Here, balls and rollers which roll between the outer rings and the inner rings of the ball bearings and the roller bearings circumferentially of both rings are generally called "rolling elements".

The finishing roller 11 is preferably made of high carbon steel or stainless steel which is the same material as that of the bearing 1. In this case, the hardness of the finishing roller 11 is made higher than that of the bearing 1, by changing quenching conditions.

The finishing operation of the land 6 on the outer ring 5 of a bearing 1 according to the present invention can be performed on a mass production line. Further, the outer ring 5 can be moved in one of its axial directions with respect to the finishing roller 11 during the finishing operation.

According to the present invention, burrs and/or fine foreign materials such as fine chips, fine grinding and/or ground particles and/or fine dust, which were produced in and/or on the land of the outer ring of the bearing in the pre-machining operation such as turning or grinding and which could not be removed even by cleaning, are unremovably embedded in the land by means of a finishing roller.

Further, any of such burrs and/or such fine foreign materials still remaining on the land surface can be caught by a spiral groove formed in the outer peripheral surface of the finishing roller so as to be removed out of the land.

Since the burrs and foreign materials embedded in the land and removed from the land do not enter the race surface area during assembly and operation, they do not cause any damage to the rolling elements and race surface. Thus, inaccuracy and other defects can be eliminated. Even if any fine dust happens to be laid on the land, it can be removed very easily and quickly before assembly.

The concept of finishing a land by pressing it by a finishing roller to a super-finished state or to approximately supper-finished state can also be applied to a land formed on the inner ring of a bearing by using an appropriate method.

## Claims

1. A method of finishing a land on an outer ring of a bearing including:
the step of rotating a cylindrical finishing roller (11) having an axis around said axis of said finishing roller (11), said finishing roller (11) having an outer peripheral surface (11b) and hardness higher than hardness of an outer ring (5) of a bearing (1), said outer ring (5) having a land (6);
the step of pressing said outer peripheral surface (11b) of said finishing roller (11) against said land (6) of said outer ring (5) while said finishing roller (11) is being rotated; and
the step of pressing projections (6b) formed on said land (6) with said finishing roller (11) to unremovably embed burrs (C) and/or fine foreign materials (D) formed on said land (6) in said land (6).

2. The method according to claim 1, wherein said finishing roller (11) is pressed against said land (6) under a pressure in a range of elastic deformation of said outer ring (5).

3. The method according to any one of the preceding claims, wherein said land (6) is mirror-finished.

4. The method according to any one of the preceding claims, wherein a relative movement between said finishing roller (11) and said land (6) is made axially of said finishing roller (11).

5. The method according to claim 4, wherein said finishing roller (11) is provided with a spiral groove (18) formed on said outer peripheral surface (11b) of said finishing roller (11).

6. The method according to any one of the preceding claims, wherein said bearing (1) comprises a ball bearing.

7. A bearing including:
a shaft (2);
a cylindrical inner ring (4) coaxially surrounding said shaft (2) and fixed to said shaft (2);
a cylindrical outer ring (5) coaxially surrounding said inner ring (4) having an inner surface defining a land (6) having small projections (6b) and small depressions (6c) formed thereon, said small depressions (6c) holding burrs (C) and/or fine foreign materials (D); and
a plurality of rolling bodies (8) arranged between said inner ring (4) and said outer ring (5),
wherein a finishing roller (11) having an outer peripheral surface (11b) is pressed at said outer peripheral surface (11b) of said finishing roller (11) together with said outer ring (5) so that said finishing roller (11) presses, at said outer surface (11b) thereof, to unremovably embed said burrs (C) and/or said fine foreign materials (D) in said land (6).

8. The bearing according to claim 7, wherein said land (6) is finished by rotating said finishing roller (11) together with said outer ring (5) and by performing a relative movement between said outer ring (5) and said finishing roller (11) axially of said finishing roller (11).

9. The bearing according to claim 7 or 8, wherein said land (6) is mirror-finished.

10. The bearing according to any one of claims 7 to 9, wherein said bearing (1) comprises a ball bearing.
